# EUROPÄISCHE PATENTSCHRIFT

(11) **EP 0 281 196 B1**
(45) Veröffentlichungstag und Bekanntmachung des Hinweises auf die Patenterteilung: **02.02.1994**
(21) Anmeldenummer: 88200351.0
(22) Anmeldetag: 25.02.1988
(51) Int. Cl.: G02B 6/44

(54) **Aufnahmevorrichtung für die Vorratslänge mindestens eines Lichtwellenleiters**
Storing device for the supply length of at least one light wave guide
Dispositif de raccordement pour la longueur de réserve d'au moins un guide d'ondes lumineuses

(30) Priorität: 03.03.1987 DE 3706768
(43) Veröffentlichungstag der Anmeldung: 07.09.1988
(73) Patentinhaber: Philips Patentverwaltung GmbH, 22335 Hamburg (DE); Philips Electronics N.V., 5621 BA Eindhoven (NL)
(72) Erfinder: Deusser, Peter, D-5000 Köln 90 (DE); Boehm, Detlef, D-5206 Neunkirchen-S. 1 (DE); Becker, Johann, D-5063 Overath (DE)
(74) Vertreter: Koch, Ingo

(56) Entgegenhaltungen:
- EP-A- 0 211 208
- DE-A- 3 428 615
- DE-A- 3 428 856
- FR-A- 2 498 766
- JP-A-60 169 810

## Beschreibung

Die Erfindung bezieht sich auf einen Vorrats behälter nach dem Oberbegriff des Anspruchs 1. Ein solcher Vorrats behälter für eine Vorratslänge mindestens eines von einem Kabelende ausgehenden Lichtwellenleiters (LWL), ist in der Nähe des Kabelendes anordbar und weist einen flachen Vorratsraum auf, in welchen die Vorratslänge in Windungsform verlegt ist, wobei ein zu einer Verbindungsstelle führendes Ende des LWL unter Verkleinerung des Windungsdurchmessers herausziehbar ist, und wobei der Vorratsraum Führungswandungen aufweist, durch welche die minimalen inneren und maximalen äußeren Windungsdurchmesser sowie die axiale Höhe begrenzt sind.

Eine derartige Anordnung ist durch die DE-OS 32 48 003 bekannt. Dort sind Enden zweier optischer Kabel in ein Muffengehäuse geführt. Die freigelegten Enden der LWL der optischen Kabel sind in Form von Windungen in Vorratsbehältern abgelegt.

Für die Herstellung einer Spleißverbindung oder für spätere Reparaturen erforderliche Überlängen können aus den Vorratsbehältern gezogen und nachfolgend wieder hineingebracht werden. Die Spleißstelle wird danach im Muffengehäuse festgelegt.

Damit insbesondere bei einer Vielzahl gestapelter Vorratsbehälter Verbindungsstellen jederzeit auch nachträglich hergestellt oder repariert werden können, haben sich Ausführungen bewährt, bei welchen die einzelnen Vorratsbehälter aus einem Muffengehäuse oder einem Verteilerschrank entnehmbar sind, damit jederzeit ein freier Zugriff zu den Spleißstellen möglich ist (vgl. Int. Wire & Cable Symposium, Proceedings 1983, Seite 47).

Vorrats behälter nach dem Obergriff des Anspruchs 1 sind im den Schriften DE-A-34 28 615 und FR-A-2 498 766 offen bart.

Der Erfindung liegt die Aufgabe zugrunde, die Anordnung der eingangs genannten Art derart zu gestalten, daß die zum Herausnehmen der Kassette notwendigen Freilängen geordnet ablegbar sind.

Die Lösung gelingt durch die charakterisierenden Merkmale des Anspruchs 1. Der Vorratsraum ist dabei in zwei Wickelräume unterteilt, von denen einer für die Herstellung der Verbindungsstelle erforderliche Verfügungslängen und der andere eine zur Entfernung der Aufnahmevorrichtung vom Kabelende erforderliche Freilänge aufnimmt, und daß aus beiden Wickelräumen Längenabschnitte des LWL unabhängig voneinander herausziehbar sind.

Durch die Erfindung ergibt sich der Vorteil, daß genügend lange Freilängen vorgesehen werden können, ohne daß dabei Schwierigkeiten entstehen, diese im Muffengehäuse oder im Verteilerschrank ohne Beschädigung und ohne zu starke Krümmungen unterzubringen.

Damit die vorgesehenen Längenabschnitte der Freilänge und der Verfügungslänge immer definiert erhalten bleiben, ohne daß beispielsweise beim Herausziehen der Verfügungslänge Teile der Freilänge mitgezogen werden, ist es vorteilhaft, daß ein zwischen der Freilänge und der Verfügungslänge liegender Abschnitt des LWL bzw. eines Bandkabels an der Aufnahmevorrichtung durch eine Klemmeinrichtung festgelegt ist.

In einfacher Weise kann die Klemmeinrichtung durch weichelastische Elemente gebildet sein, welche zwischen sich den LWL halten.

Das Einbringen der Freilänge und der Verfügungslänge, welche zusammen die Vorratslänge bilden, wird dadurch erleichtert, daß die Klemmeinrichtung ein verschiebbares Element aufweist, mittels dessen der LWL bzw. ein Bandkabel gegen eine Festwandung drückbar ist. Mit einer solchen Anordnung kann die Festlegung nachträglich nach dem unbehinderten Einbringen des LWL bzw. des Bandkabels erfolgen.

Ein klemmfreies Aus- und Einziehen der Freilänge oder der Verfügungslänge ist bei flachem Aufbau der Aufnahmevorrichtung dadurch ermöglicht, daß die Freilänge und die Verfügungslänge spiralförmig eingewickelt sind. Dabei ist bevorzugt vorgesehen, daß bei einer für die Aufnahme eines einzigen LWL vorgesehenen Aufnahmevorrichtung der Abstand zwischen den Führungswandungen kleiner als das 1,3 fache der Dicke des LWL ist, oder daß bei einer für die Aufnahme eines aus flach nebeneinander verbundenen LWL bestehenden Faserbandes vorgesehenen Aufnahmevorrichtung der Abstand zwischen den Führungswandungen geringfügig größer als die Breite des Faserbandes ist. Bei solchen Anordnungen ergeben sich besonders flache Aufnahmevorrichtungen. Insbesondere ist jedoch stets ein klemmfreier spiraliger Verlauf des LWL bzw. eines Faserbandes gesichert.

Kleine Abmessungen werden gemäß einer bevorzugten Ausführungsform dadurch erreicht, daß die Wickelräume koaxial zueinander angeordnet sind. Ein flacher Aufbau ergibt sich dabei dadurch, daß die Wickelräume in einer Ebene ineinander verschachtelt angeordnet sind. Besonders kleine Seitenabmessungen sind dadurch erreichbar, daß die Wickelräume koaxial übereinander angeordnet sind.

Im abgelegten Zustand sollen die Biegeradien der LWL so groß sein, daß sich keine nennenswerte zusätzliche Erhöhung der optischen Dämpfung ergibt. Die beim Herausziehen der Freilänge oder der Verfügungslänge erfolgende Verringerung des Windungsdurchmessers kann jedoch bis auf einen erheblich geringeren Biegeradius erfolgen, wobei lediglich zu beachten ist, daß mechanische Beschädigungen der LWL ausgeschlossen sind. Deshalb ist gemäß einer Weiterbildung der Erfindung vorgesehen, daß die Windungen um einen Kern verlegt sind, dessen Radius größer als der mechanisch zulässige minimale Biegungsradius des LWL und kleiner als der zur Verhinderung einer Dämpfungserhöhung minimal zulässige Biegeradius der LWL ist. Ein kleiner Kerndurchmesser bedeutet, daß ein großer Längenbereich des LWL herausziehbar ist.

Gemäß einer bevorzugten Ausführungsform, welche das Herausziehen eines besonders großen Anteils des LWL oder eines Bandkabels zuläßt, ist vorgesehen, daß der Kern exzentrisch zur äußeren Umfangsfläche des ihn umgebenen Wickelraums angeordnet und zu den einander benachbarten Ein- und Austrittsöffnungen für den LWL hin verlagert ist.

Bei einer Ausführungsform, bei welcher die Wickelräume für die Freilänge und die Verfügungslänge in einer Ebene angeordnet sind, ist es besonders vorteilhaft, daß eines der Enden eines Faserbandes in einen der Wickelräume durch einen Führungskanal geleitet ist, in welchem seine Querschnittsfläche um 90° relativ zu seiner Wickellage gedreht ist. Dann wird kein Einbauraum für ein hochkant über die Aufnahmeeinrichtung zu führendes Faserbandes benötigt.

Aufnahmeeinrichtungen sind jedem Ende eines optischen Kabels zuzuordnen. Deshalb können zwei erfindungsgemäß gestaltete Aufnahmeeinrichtungen nebeneinander zu einer Baueinheit vereinigt sein. Insbesondere, wenn die LWL eines optischen Kabels mit Steckern zu verbinden sind, ist eine kompakte Lösung vorteilhaft, welche dadurch gekennzeichnet ist, daß die Wickelräume auf einer Seite einer Grundplatte angeordnet sind, welche auf der anderen Seite eine Speichereinrichtung für mindestens einen LWL aufweist, welcher mit einem der in den Wickelräumen gespeicherten LWL zu verbinden ist.

Die Erfindung und deren Weiterbildungen werden anhand der Beschreibung von in der Zeichnung dargestellten vorteilhaften Ausführungsbeispielen näher erläutert.
- Fig. 1: zeigt eine erste Ausführungsform einer erfindungsgemäß gestalteten Aufnahmevorrichtung.
- Die Fig. 2, 3 und 4: zeigen verschiedene Ansichten einer abgewandelten Ausführungsform einer erfindungsgemäß gestalteten Aufnahmevorrichtung.
- Die Fig. 5,6,7 und 8: zeigen verschiedene Klemmeinrichtungen zur Festlegung eines LWL oder eines Faserbandes im Übergangsbereich zwischen einer Freilänge und einer Verfügungslänge.
- Die Fig. 9,10 und 11: zeigen verschiedene Ansichten einer weiteren Ausführungsform der Erfindung.
- Fig. 12: zeigt einen Längsschnitt durch einen Einführungskanal der in den Fig. 1 bis 4 dargestellten Aufnahmevorrichtungen.
- Fig. 13: zeigt eine vorteilhafte Halterung für eine Verbindungsstelle.
- Fig. 14: zeigt eine weitere vorteilhafte Halterung für eine Verbindungsstelle.

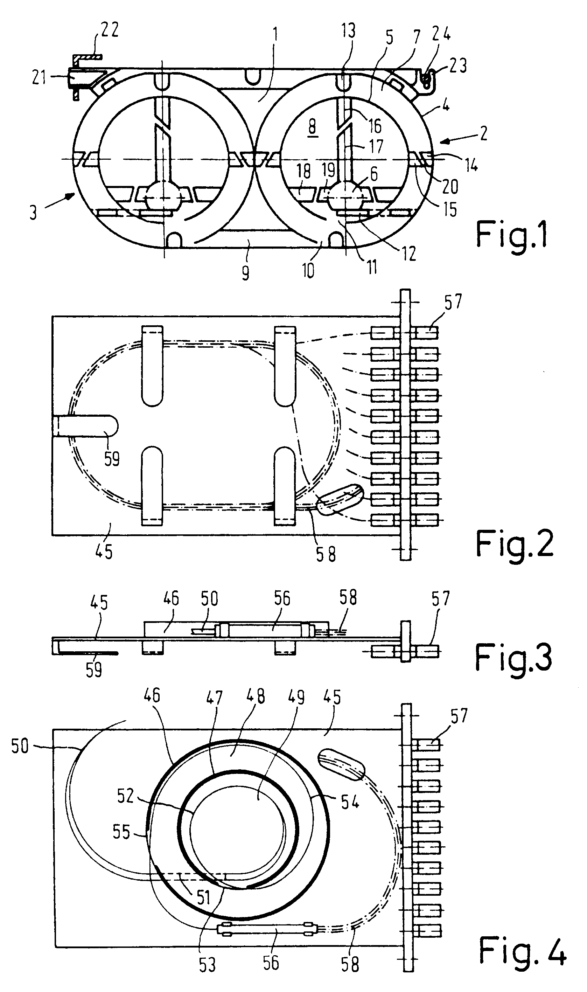

In Fig. 1 sind auf einer gemeinsamen Grundplatte 1 zwei gleichartige erfindungsgemäß gestaltete Aufnahmevorrichtungen 2 und 3 angeordnet, in welche jeweils die Vorratslängen eines Faserbandes unterzubringen sind , welche von beispielsweise in einem Muffengehäuse festgelegten Enden zweier optischer Kabel ausgehen.

Die beiden Aufnahmevorrichtungen 2 und 3 sind spiegelbildlich gleich. Die Vorratslängen sind entsprechend mit umgekehrten Wickelsinn einzuwickeln.

An die Grundplatte 1 sind senkrecht hochstehende Ringwandungen 4 und 5 sowie ein mittiger Kern 6 angeformt. Zwischen diesen Teilen sind Wickelräume 7 und 8 gebildet.

Im Wickelraum 7 ist als Verfügungslänge der Längenbereich des Faserbandes einzubringen, welcher für die Herstellung einer im Bereich 9 anzuordneten Spleißverbindung benötigt wird. Die erforderliche Verfügungslänge ist durch die Öffnung 10 herausziehbar.

Im Wickelraum 8 ist als Freilänge der Längenbereich des Faserbandes einzulegen, welcher benötigt wird, um die auf der Grundplatte 1 angeordneten Aufnahmevorrichtungen 2 und 3 beispielsweise aus einem Stapel gleichartiger Anordnungen problemlos entnehmen zu können. Ein Ende der Freilänge ist durch die Verbindungsöffnung 11 zur im Wickelraum 7 unterzubringenden Verfügungslänge zu führen. Das andere Ende ist durch den Führungskanal 12 nach außen zum Ende des optischen Kabels zu leiten.

Die Höhe der Wickelräume 7 und 8 ist einerseits durch die Grundplatte 1 und andererseits durch parallel zu dieser gegenüberliegend an die Ringwandungen 4 und 5 sowie den inneren Kern 6 angeformte Haltelaschen 13,14,15 sowie 16,17,18 und 19 begrenzt. Diese Höhe ist geringfügig größer als die Breite des einzulegenden Faserbandes, damit ein genügendes Spiel für eine Gleitbewegung des Faserbandes gewährleistet ist. Schräge Schlitze 20 wie zwischen den Haltelaschen 14 und 15 ermöglichen ein Hineinlegen der Vorratslängen des Faserbandes, ohne daß danach ein unbeabsichtigtes Wiederhinausgleiten befürchtet werden muß.

Die speichenförmige Begrenzung der Wickelräume 7 und 8 läßt große Freibereiche offen, so daß das Faserbandes beim Einlegen gut handhabbar ist.

Der innere Kern 6 ist exzentrisch zur Ringwandung 5 angeordnet und liegt nahe sowohl der Verbindungsöffnung 11 als auch dem Führungskanals 12, so daß die Freilänge aus dem Wickelraum 8 weitgehend herausziehbar ist, weil die Windungen sich bis auf den Durchmesser des inneren Kerns 6 verkleinern können. Andererseits ist der Windungsdurchmesser nach dem Zurückschieben der Freilänge durch den Führungskanal 12 beim Anlegen an der Ringwandung 5 genügend groß, um das Entstehen von Zusatzdämpfungen ausschließen zu können.

Die Grundplatte 1 mit den Aufnahmevorrichtungen 2 und 3 ist mittels einer Nase 21 in eine Bohrung einer Halteschiene 22 eines nicht gezeigten Muffengehäuses gesteckt. Die Rastgabel 23 ist danach mittels einer Schwenkbewegung auf die Haltestange 24 des Muffengehäuses gerastet.

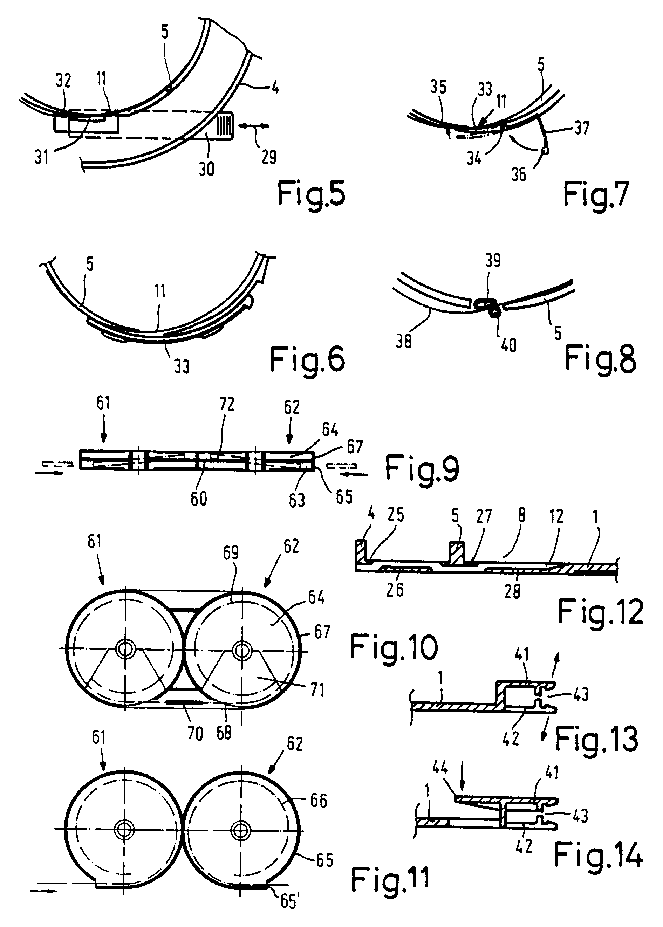

Die Gestaltung des Führungskanals 12 ist in Fig. 12 verdeutlicht, in welcher ein Längsschnitt dargestellt ist. In die Grundplatte 1 ist ein formtechnisch einfach herstellbarer Führungskanal 12 eingeformt, welcher wechselnd nach oben und unten offen ist. Zwischen den Deckbereichen 25,26,27 und 28 ist die Dicke eines Faserbandes gestreckt führbar. Das Faserband verläuft dort also flach in der Ebene der Grundplatte 1. Beim Eintritt in den Wickelraum 8 wird es um 90° in hochkantige Lage gedreht.

Die Übergangsöffnung 11 ist in Fig. 1 offen dargestellt. Damit in diesem Bereich ein Hindurchziehen des Faserbandes vom Wickelraum 7 in den Wickelraum 8 oder umgekehrt verhindert ist, sollte das Faserband oder gegebenenfalls ein LWL dort festgelegt werden.

Das kann mittels der in den Figuren 5 bis 8 dargestellten Einrichtungen geschehen.

In Fig. 5 ist ein in der Grundplatte in Richtung des Doppelpfeils 29 verschiebbarer Klemmschieber 30 vorgesehen, welcher mit einem Winkelansatz 31 das durch die Übergangsöffnung 11 geführte Faserband an das Ende 32 der Ringwandung 5 klemmt.

In Fig. 6 ist ein gleichwirkendes Klemmsegment 33 an der Ringwandung 5 über den Bereich der Übergangsöffnung 11 führbar.

Bei der Ausführungsform nach Fig. 7 überlappen sich im Bereich der Übergangsöffnung 11 Die Enbereiche der Ringwandung 5, deren äußeres Überlappungsende 33 wegen der Nut 34 nach innen an den anderen Überlappungsbereich 35 biegbar ist. Das geschieht mittels der Verdickung 36 des über ein Filmscharnier an die Ringwandung 5 angeformten Schwenkarms 37. Die Verdickung 36 wird in die enger gestaltete Nut 34 eingedrückt, wodurch das Überlappungsende 33 aus der gestrichelten Stellung in Anlage an das Überlappungsende 35 gedrückt wird. Dazwischen wird das Faserband fixiert.

Eine besonders einfache Klemmeinrichtung, welche aber nicht klemmfrei einstellbar ist, zeigt Fig. 8. Das Faserband 38 ist elastisch zwischen den weichelastisch beschichteten Dornen 39 und 40 eingeklemmt.

Die im Bereich 9 nach Fig. 1 anzuordneten Verbindungsstellen können vorteilhaft mittels angeformter Halterungen der in den Figuren 13 und 14 dargestellten Art festgelegt werden.

Gemäß Fig. 13 sind an der Grundplatte 1 in der Papierebene beabstandete und senkrecht zur Papierebene seitlich gegeneinander versetzte biegsame Klammerarme 41 und 42 vorgesehen, welche einen durch einen Abstandsspalt 43 zugänglichen Aufnahmeraum für eine Verbindungsstelle bilden. Der Abstandsspalt 43 kann durch Aufbiegen der Klammerarme 41 und 42 genügend vergrößert werden.

Bei der Ausführung nach Fig. 14 kann die Vergrößerung des Abstandsspalts 43 durch Drücken auf den Hebelansatz 44 in Pfeilrichtung bewirkt werden.

Die in den Figuren 5 bis 8 sowie 13 und 14 dargestellten Einrichtungen können auch bei den in den Figuren 2 bis 4 oder 9 bis 11 schematisch dargestellten Ausführungsarten von Aufnahmevorrichtungen verwendet werden. Ein Führungskanal nach Fig. 12 ist ebenfalls für die Ausführungsart nach den Fig. 2 bis 4 verwendbar.

Fig. 4 zeigt die Aufsicht auf eine auf einer Grundplatte 45 angeordnete Aufnahmevorrichtung, welche zwischen den Ringwandungen 46 und 47 Wickelräume 48 und 49 aufweist. Das von einem Ende eines nicht gezeigten optischen Kabels kommende Faserband 50 gelangt durch den Führungskanal 51 in den inneren Wickelraum 49 und bildet dort mit mindestens einer Windung 52 eine herausziehbare Freilänge. Danach verläuft das Faserband 50 durch die Übergangsöffnung 53 in den äußeren Wickelraum 48, wo es wiederum mit mindestens einer Windung 54 eine durch die Umfangsöffnung 55 herausziehbare Verfügungslänge bildet.

Die einzelnen LWL des Faserbandes 50 sind über die Verbindungsstelle 56 über Einzel-LWL 58 zu den Steckern 57 geführt. Die Einzel-LWL 58 werden durch die Öffnung 59 zur Rückseite der Grundplatte 45 geleitet. Der weitere Verlauf der Einzel-LWL 58 auf der Rückseite der Grundplatte 45 zeigt Fig. 2. Vorratslängen der Einzel-LWL 58 sind mit mindestens einer Windung unter den Halteklammern 59 gespeichert. Fig. 3 zeigt eine zugehörige Seitenansicht.

Gegenüber der in Fig. 1 dargestellten Anordnung sind bei der in den Fig. 9 bis 11 in drei Ansichten dargestellten Ausführung die Wickelräume für die Freilänge einerseits und die Verfügungslänge andererseits an verschiedenen Seiten einer Mittelplatte 60 angeordnet. Da die Aufnahmevorrichtungen 61 und 62 wiederum analog Fig. 1 spiegelbildlich gleich sind, wird lediglich die rechte Aufnahmevorrichtung 62 näher erläutert. Im Unterschied zu Fig. 1 sind die Wickelräume 63 bzw. 64 für die Freilänge bzw. die Verfügungslänge gleich und liegen sich an verschiedenen Seiten der Mittelplatte 60 gegenüber. Die äußere Ringwandung 65 des Wickelraums 63 weist eine Umfangsöffnung 65ʹ auf, durch welche die Freilänge des mit der Windung 66 geführten Faserbandes herausziehbar ist (Fig. 11).

Die entsprechende Ringwandung 67 des Wickelraums 64 hat eine Umfangsöffnung 68, durch welche die Verfügungslänge der Windung 69 ausziehbar und zum Verbindungselement 70 geführt ist. Im Bereich 71 ist die Mittelplatte 60 durchbrochen, so daß dort der Übergangsabschnitt 72 (Fig.9) des Faserbandes 50 schräg von dem Wickelraum 63 in den Wickelraum 64 überführbar ist.

## Patentansprüche

1. Vorratsbehälter zum Speichern einer Vorratslänge eines Lichtwellenleiters oder eines Lichtwellenleiter- Faserbandes mit einer ersten Wickelkammer (8,49,63) und einer zweiten Wickelkammer (7,48,64), wobei jede dieser Wickelkammern von einer Umfangswand (4,5,46,47,65,67) und zwei Stirnwänden (1,16,17,18,45,60) gebildet ist, dadurch gekennzeichnet, daß die Umfangswand im wesentlichen zylinderförmig ist, daß eine der Stirn- oder Umfangswände eine den beiden Wickelkammern gemeinsame Wand (1,45,46) ist, welche eine Durchführungsöffnung (11,53) für den Lichtwellenleiter oder das Faserband aufweist, wobei der Durchführungsöffnung Mittel zum Klemmen des Lichtwellenleiters oder des Faserbandes zugeordnet sind, und daß jede der Wickelkammern eine Durchführungsöffnung (10,12,51,55) für die Durchführung jeweils eines Endes des Lichtwellenleiters oder des Faserbandes aus der Kammer aufweisen.

2. Aufnahmevorrichtung nach Anspruch 1,
dadurch gekennzeichnet, daß die Umfangswand (5,46) der ersten Wickelkammer (8,47) der Wickelkern der zweiten Wickelkammer (7,48) ist.

3. Aufnahmevorrichtung nach Anspruch 1,
dadurch gekennzeichnet, daß die Wickelkammern (63,64) eine gemeinsame Stirnwand (66) haben.

4. Aufnahmevorrichtung nach einem der Ansprüche 1 bis 3,
dadurch gekennzeichnet, daß die Klemmeinrichtung durch weichelastische Elemente (39,40) gebildet ist.

5. Aufnahmevorrichtung nach einem der Ansprüche 1 bis 3,
dadurch gekennzeichnet, daß die Klemmeinrichtung ein verschiebbares Element (30,33,37) aufweist.

6. Aufnahmevorrichtung nach Anspruch 2,
dadurch gekennzeichnet, daß die Wickelkammern (7,8,48,49) an einer Seite einer Grundplatte angeordnet sind, und daß an der anderen Seite der Grundplatte eine weitere Wickelkammer angeordnet ist.

7. Aufnahmevorrichtung nach einem der Ansprüche 1 bis 6,
dadurch gekennzeichnet, daß in den Wickelkammern jeweils ein Teilabschnitt eines LWL eingelegt ist, daß der LWL im mittleren Bereich seiner Länge von der Klemmeinrichtung gehalten ist, daß in den Wickelkammern jeweils ein Längenbereich des LWL spiralförmig verlegt und mit einem Ende gleitfähig durch die jeweilige Führungsöffnung nach außen geführt ist.

8. Aufnahmevorrichtung nach einem der Ansprüche 1 bis 6,
dadurch gekennzeichnet, daß in die Wickelkammern jeweils ein Längenbereich eines LWL-Faserbandes eingelegt ist, daß das LWL-Faserband im mittleren Bereich seiner Länge von der Klemmeinrichtung gehalten ist, daß in den Wickelkammern jeweils ein Längenbereich des LWL-Faserbandes spiralförmig eingelegt und mit einem Ende gleitfähig durch die jeweilige Führungsöffnung nach außen geführt ist.

9. Aufnahmevorrichtung nach Anspruch 2,
dadurch gekennzeichnet, daß der Kern (6) der ersten Wickelkammer (8) exzentrisch zu seiner Umfangswand (5) angeordnet und zu einander benachbarten Ein- bzw. Austrittsöffnungen (11 bzw. 12) für einen LWL bzw. ein LWL-Faserband verlagert ist.

## Claims

1. A storage container for a spare length of a optical fibre or a optical fibre ribbon, which storage container comprises a first winding space (8,49,63) and a second winding space (7,48,64) each formed by a peripheral wall (4,5,46,47,65,67) and two end walls (1,16,17,18,45,60), characterized in that the peripheral wall is essentially cylindrical, in that one of the end walls or peripheral walls is a wall (1,45,46) which is common to the two winding spaces, said wall having a opening (11,53) for the optical fibre or the fibre ribbon, means for clamping the optical fibre or the fibre ribbon being associated with the opening, and in that each winding space has a opening (10,12,51,55) for allowing the passage of a respective end of the optical fibre or of the fibre ribbon from the space.

2. A storage device as claimed in Claim 1, characterized in that the peripheral wall (5,46) of the rust winding space (8,47) is the winding core of the second winding space (7,48).

3. A storage device as claimed in Claim 1, characterized in that the winding spaces (63,64) have a common end wall (66).

4. A storage device as claimed in ay of the Claims 1 to 3, characterized in that the clamping device is formed by soft-elastic elements (39,40).

5. A storage device as claimed in any of the Claims 1 to 3, characterized in that the clamping device comprises a slidable element (33,30,37).

6. A storage device as claimed in Claim 2, characterized in that the winding spaces (7,8,48,49) are arranged on one side of a base plate, and in that a further winding space is arranged on the other side of the base plate.

7. A storage device as claimed in any one of the Claims 1 to 6, characterized in that the winding spaces accommodate a section of an optical fibre, in that the central area of the optical fibre length is retained by the clamping device, in that a length of the optical fibre is coiled in the winding spaces and has one end slidably passed to the exterior through the respective opening.

8. A storage device as claimed in any one of the Claims 1 to 6, characterized in that the winding spaces accommodate a length of an optical fibre ribbon, in that the central area of the optical fibre ribbon length is retained by the clamping device, in that a length of the optical fibre ribbon is coiled in the winding spaces and has one end slidably passed to the exterior through the respective opening.

9. A storage device as claimed in Claim 2, characterized in that the core (6) of the first winding space (8) is eccentrically arranged with respect to its peripheral wall (5) and shifted towards the neighbouring entrance and exit openings (11 and 12), respectively for a optical fibre or optical fibre ribbon.

## Revendications

1. Dispositif de stockage conçu pour stocker une longueur de réserve d'un guide de lumière ou d'une bande de guides de lumière comportant une première chambre d'enroulement (8, 49, 63) et une deuxième chambre d'enroulement (7, 48, 64) chacune de ces chambres d'enroulement état constituée d'une paroi circonférentielle (4, 5, 46, 47, 65, 67) et de deux parois terminales (1, 16, 17, 18, 45, 60), caractérisé en ce que la paroi circonférentielle est sensiblement cylindrique, en ce que l'une des parois terminales ou circonférentielles constitue la paroi commune (1, 45, 46) des deux chambres d'enroulement présentant une ouverture de traversée (11, 53) pour les guides de lumière ou la bande de fibres, ladite ouverture de travrsée comportant des moyens permettant le serrage du guide de lumière ou de la bande de fibres, et en ce que chacune des chambres d'enroulement présente une ouverture de travrsée (10, 12, 51, 55) pour en sortir une extrémité du guide de lumière ou de la bande de fibres.

2. Dispositif de stockage selon la revendication 1, caractérisé en ce que la paroi circonférentielle (5, 46) de la première chambre d'enroulement (8, 47) constitue le noyau d'enroulement de la deuxième chambre d'enroulement (7, 48).

3. Dispositif de stockage selon la revendication 1, caractérisé en ce que les chambres d'enroulement (63, 64) présentent une paroi terminale commune (66).

4. Dispositif de stockage selon l'une des revendications 1 à 3, caractérisé en ce que le dispositif de serrage est constitué d'éléments souples (39, 40).

5. Dispositif de stockage selon l'une des revendications 1 à 3, caractérisé en ce que le dispositif de serrage comporte un élément coulissant (30, 33, 37).

6. Dispositif de stockage selon la revendication 2, caractérisé en ce que les chambres d'enroulement (7, 8, 48, 49) sont disposées sur l'une des deux faces d'une plaque de fond et qu'une autre chambre d'enroulement est disposée sur l'autre face de la plaque de fond.

7. Dispositif de stockage selon l'une des revendications 1 à 6, caractérisé en ce que chaque fois un bout d'un guide de lumière est introduit dans les chambres d'enroulement, en ce que le guide de lumière est maintenu par un dispositif de serrage dans la partie centrale de sa longueur, en ce que chaque fois une longueur du guide de lumière est introduite en hélice dans les chambres d'enroulement et qu'une extrémité est sortie souplement de l'ouverture de traversée correspondante.

8. Dispositif selon l'une des revendications 1 à 6, caractérisé en ce que chaque fois un bout d'une bande de guides de lumière est introduit dans les chambres d'enroulement, en ce que la bande de guides de lumière est maintenue par un dispositif de serrage dans la partie centrale de sa longueur, en ce que chaque fois une longueur de la bande de guides de lumière est introduite en hélice dans les chambres d'enroulement et qu'une extrémité est sortie souplement de l'ouverture de traversée correspondante.

9. Dispositif de stockage selon la revendication 2, caractérisé en ce que le noyau (6) de la chambre d'enroulement (8) est disposé excentriquement par rapport à sa paroi circonférentielle (5) et qu'il est décalé par rapport aux ouvertures d'entrée et de sortie voisines (11 respectivement 12) conçues pour un guide de lumière respectivement une bande de guides de lumière.
